# EUROPEAN PATENT APPLICATION

(11) **EP 3 825 374 A1**
(43) Date of publication of application: **26.05.2021**
(21) Application number: 20165031.4
(22) Date of filing: 23.03.2020
(51) Int. Cl.: C09J 7/38, C09J 153/00

(54) **PRE-LAID POLYMER WATERPROOF ROLLING MATERIAL**

(30) Priority: 20.11.2019 CN 201911138945
(71) Applicant: Jiangsu Canlon Building Materials Co., Ltd., Suzhou, Jiangsu 215234 (CN)
(72) Inventor: YANG, Li, Suzhou, Jiangsu 215234 (CN); CAI, Jian, Suzhou, Jiangsu 215234 (CN); LI, Zhongren, Suzhou, Jiangsu 215234 (CN)
(74) Representative: de Arpe Fernandez, Manuel

(57) **Abstract**

A pre-laid polymer waterproof rolling material, which comprises a sheet-like polymer carrier, a hot-melt pressure-sensitive adhesive layer on the sheet-like polymer carrier, and an anti-sticking coating on the hot-melt pressure-sensitive adhesive layer; The anti-sticking coating comprises the following components: 100-160 parts by weight of water; 50-80 parts by weight of a polyurethane resin; 15-20 parts by weight of a pigment; 10-12 parts by weight of a filler; 0.3-1 part by weight of a cross-linking agent; 0.5-1 part by weight of an antioxidant; 1-2.5 parts by weight of an anti-ultraviolet agent; and 0.03-0.2 part by weight of a thickener. The anti-sticking coating in the present application uses water as a solvent, water is non-toxic and non-corrosive, thus there is no environmental pollution problem in the production process.

## Description

### Technical Field

The present invention relates to the field of waterproofing, in particular to a pre-laid polymer waterproof rolling material.

### Background Art

A currently known polymer sheet is used as a carrier, a hot-melt pressure-sensitive adhesive is used as an adhesive layer, and the surface is further covered with a layer of white cement sand as an anti-sticking layer.

Such products have a waterproof function mainly by means of lap jointing by the lapped edges to each other for a connection as a whole; the pre-laid polymer waterproof rolling material has a better waterproof effect than the asphalt-based pre-laid polymer waterproof rolling material.

However, the white cement sand used in the anti-sticking layer of the pre-laid polymer waterproof rolling material will result in dust during the production and will pollute the environment. At the same time, the white cement sand has extremely alkaline and is highly corrosive.

### Summary of the invention

An object of the present invention is to provide a pre-laid polymer waterproof rolling material to solve the above-mentioned problems in the prior art.

In order to achieve the above object of the present invention, the following technical solutions are used:
a pre-laid polymer waterproof rolling material comprises a sheet-like polymer carrier, a hot-melt pressure-sensitive adhesive layer on the sheet-like polymer carrier, and an anti-sticking coating on the hot-melt pressure-sensitive adhesive layer;
the anti-sticking coating includes the following components:
   100-160 parts by weight of water;
   50-80 parts by weight of a polyurethane resin;
   15-20 parts by weight of a pigment;
   10-12 parts by weight of a filler;
   0.3-1 part by weight of a cross-linking agent;
   0.5-1 part by weight of an antioxidant;
   1-2.5 parts by weight of an anti-ultraviolet agent; and
   0.03-0.2 part by weight of a thickener.

Further, the sheet-like polymer carrier comprises polyethylene, polypropylene, ethylene-olefin copolymer, ethylene-vinyl acetate copolymer, polyvinyl acetate, polyethyl acrylate, polytetrafluoroethylene, polyvinylidene fluoride, polyethylene terephthalate, polyvinyl chloride, polyamide, or a combination of two or more of these materials.

Further, the hot-melt pressure-sensitive adhesive layer comprises a butyl rubber-based adhesive, a polyisobutylene-based adhesive, a butyl-based adhesive, an acrylic adhesive, a styrene-isoprene-styrene-based adhesive, a styrene-ethylene-butene-styrene-based adhesive, a styrene-butadiene-styrene-based adhesive, a styrene-butadiene-based adhesive, or a combination of two or more of these materials.

Further, the filler is calcium carbonate, silicon dioxide, magnesium silicate, aluminum hydroxide or aluminum oxide; the pigment is titanium dioxide or zinc oxide; the anti-ultraviolet agent is a composite anti-ultraviolet agent; the cross-linking agent is an isocyanate; the thickener is bentonite; and the antioxidant is a phenolic antioxidant.

Further, the thickness of the sheet-like polymer carrier is 0.3-2 mm, the thickness of the hot-melt pressure-sensitive adhesive layer is 0.1-0.5 mm, and the thickness of the anti-sticking coating is 5-50 um.

Further, the titanium dioxide is a rutile nano-titanium dioxide.

Further, one side of the surface of the hot-melt pressure-sensitive adhesive layer is exposed, and a peelable release film is adhered to the hot-melt pressure-sensitive adhesive layer that is exposed; an adhesive layer is provided on the other side of the bottom of the sheet-like polymer carrier, a peelable release film is adhered to the adhesive layer, and the adhesive layer is a hot-melt pressure-sensitive adhesive layer.

According to the technical solutions stated above, the present invention has the following beneficial effects:
The anti-sticking coating in the present application uses water as a solvent, water is non-toxic and non-corrosive, thus there is no environmental pollution problem in the production process.

In the anti-sticking coating of the present application, polyurethane resin can react with concrete to achieve better adhesion. The fillers and pigments can play an anti-sticking role as inorganic molecules. At the same time, the pigments can prevent ultraviolet rays through the mechanism of reflecting ultraviolet rays. The anti-ultraviolet agents have anti-ultraviolet effects. The antioxidants have anti-aging effects. The thickener plays a role of thickening to prevent the pigments and fillers in the emulsion from sinking. The crosslinking agent crosslinks the polyurethane resin molecules together and prevents the anti-sticking coating from sticking to the back of the sheet-like polymer carrier at high temperatures.

### Brief Description of the Drawings

In order to illustrate the technical solutions in the particular embodiments of the present invention or in the prior art more clearly, the accompanying drawings to be used in the description of the particular embodiments or the prior art will be briefly introduced below; obviously, the accompanying drawings in the following description show some of the embodiments of the present invention, and those of ordinary skill in the art may still derive other drawings from these accompanying drawings without creative effort.
Figure 1 is a schematic structural diagram of the waterproof rolling material provided in an embodiment of the present invention.
Figure 2 is a schematic diagram of a connection relationship between a pre-laid polymer waterproof rolling material provided in an embodiment of the present invention and an adhesive tape.

Reference numbers in the drawings: 1-sheet-like polymer carrier; 2-hot-melt pressure-sensitive adhesive layer; 3-anti-sticking coating; 4-release film; and 5-adhesive layer.

### Detailed Description of Embodiments

The technical solutions in the present invention will be described clearly and completely below with reference to the drawings; obviously, the described embodiments are some of, rather than all of, the embodiments of the present invention. Based on the embodiments of the present invention, all other embodiments obtained by those of ordinary skill in the art without involving any inventive effort fall within the scope of protection of the present invention.

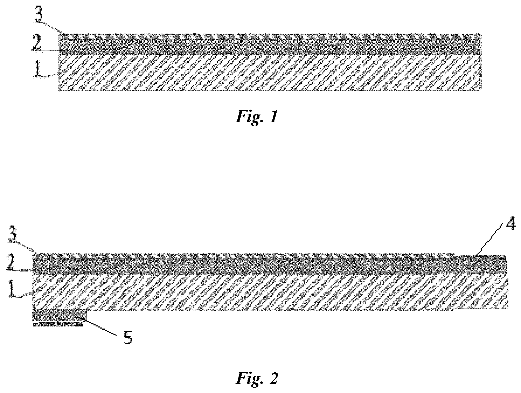

As shown in Figure 1-Figure 2, a pre-laid polymer waterproof rolling material of this application comprises a sheet-like polymer carrier 1, a hot-melt pressure-sensitive adhesive layer 2 on the sheet-like polymer carrier 1, and an anti-sticking coating 3 on the hot-melt pressure-sensitive adhesive layer 2;

The anti-sticking coating 3 comprises the following components:
100-160 parts by weight of water;
50-80 parts by weight of a polyurethane resin;
15-20 parts by weight of a pigment;
10-12 parts by weight of a filler;
0.3-1 part by weight of a cross-linking agent;
0.5-1 part by weight of an antioxidant;
1-2.5 parts by weight of an anti-ultraviolet agent; and
0.03-0.2 part by weight of a thickener.

Specifically, the sheet-like polymer carrier 1 includes polyethylene, polypropylene, ethylene-olefin copolymer, ethylene-vinyl acetate copolymer, polyvinyl acetate, polyethyl acrylate, polytetrafluoroethylene, polyvinylidene fluoride, polyethylene terephthalate, polyvinyl chloride, polyamide, or a combination of two or more of these materials.

Specifically, the hot-melt pressure-sensitive adhesive layer 2 includes a butyl rubber-based adhesive, a polyisobutylene-based adhesive, a butyl-based adhesive, an acrylic adhesive, a styrene-isoprene-styrene-based adhesive, a styrene-ethylene-butene-styrene-based adhesive, a styrene-butadiene-styrene-based adhesive, a styrene-butadiene-based adhesive, or a combination of two or more of these materials.

Specifically, the filler is calcium carbonate, silicon dioxide, magnesium silicate, aluminum hydroxide or aluminum oxide; the pigment is titanium dioxide or zinc oxide; the anti-ultraviolet agent is a composite anti-ultraviolet agent; the cross-linking agent is an isocyanate; the thickener is bentonite; and the antioxidant is a phenolic antioxidant.

Specifically, the thickness of the sheet-like polymer carrier is 0.3-2 mm, preferably 0.6-1.5 mm, more preferably 0.7-1.2 mm, and most preferably 0.9 mm.

The thickness of the hot-melt pressure-sensitive adhesive layer is 0.1-0.5 mm, preferably 0.2-0.45 mm, and more preferably 0.25-0.40 mm.

The thickness of the anti-sticking coating 3 is 5-50 um, preferably 10-40 um, and more preferably 20-30 um.

Specifically, the titanium dioxide is a rutile nano-titanium dioxide.

Specifically, one side of the surface of the hot-melt pressure-sensitive adhesive layer 2 is exposed, and a peelable release film 4 is adhered to the hot-melt pressure-sensitive adhesive layer 2 that is exposed; an adhesive layer 5 is provided on the other side of the bottom of the sheet-like polymer carrier 1, a peelable release film 4 is adhered to the adhesive layer 5, and the adhesive layer 5 is a hot-melt pressure-sensitive adhesive layer.

When the hot-melt pressure-sensitive adhesive layer 2 that is exposed and the adhesive layer 5 are overlapped on the short edges of a plurality of the pre-laid polymer waterproof rolling materials, the release film 4 can be directly peeled off, and they are bonded by the hot-melt pressure-sensitive adhesive layer 2 that is exposed and the adhesive layer 5. The release film 4 has the function of isolating the hot-melt pressure-sensitive adhesive layer 2 and the adhesive layer 5 that are exposed from tackiness when the pre-laid polymer waterproof rolling materials are transported.

The hot-melt pressure-sensitive adhesive layer 2 that is exposed has a width of 8-10 cm and a thickness of 0.3-0.5 mm, and the adhesive layer 5 has a width of 8-10 cm and a thickness of 0.1-0.2 mm.

The pre-laid polymer waterproof rolling materials of the present invention includes the following two processing methods:
a method for processing the pre-laid polymer waterproof rolling material of the present invention includes the following steps:
the hot-melt pressure-sensitive adhesive is coated on the sheet-like polymer carrier 1 to form a hot-melt pressure-sensitive adhesive layer 2.

The coating temperature of the hot-melt pressure-sensitive adhesive is 150-180°C; the coating method of the hot-melt pressure-sensitive adhesive can be die-groove extrusion, doctor blade coating or roller coating.

The anti-sticking coating 3 is formulated into an emulsion according to the above ratio, and after the hot-melt pressure-sensitive adhesive layer 2 is cooled to 60-70°C, the prepared emulsion is coated on the hot-melt pressure-sensitive adhesive layer 2; the coating method of the emulsion can be spray gun spray coating or roller coating.

Drying in an oven at 50-60°C to evaporate the water in the emulsion, forming the anti-sticking coating 3.

Another method for processing the pre-laid polymer waterproof rolling material of the present invention includes the following steps:
the hot-melt pressure-sensitive adhesive is coated on the sheet-like polymer carrier 1 to form a hot-melt pressure-sensitive adhesive layer 2.

The coating temperature of the hot-melt pressure-sensitive adhesive is 150-180°C. The coating method of the hot-melt pressure-sensitive adhesive can be die-groove extrusion, doctor blade coating or roller coating.

Preparing the anti-sticking coating 3 into an emulsion according to the above ratio, coating the prepared emulsion on the isolated layer, which may be PE or PET, and then transferring to a hot-melt pressure-sensitive adhesive layer 2 at a temperature of 60-70°C, and then tearing off the isolated layer. The coating method of the emulsion can be spray gun spray or roller coating.

Drying in an oven at 50-60°C to evaporate the water in the emulsion, forming the anti-sticking coating 3.

The formulations of the hot-melt pressure-sensitive adhesive layer 2 in this application are shown in Table 1:

**Table 1 Formulation of hot-melt pressure-sensitive adhesive layer**

| Raw materials | Ratio/% |
|---|---|
| Naphthenic oil 4010 | 20 |
| Zhongkexinyuan PZX-H1100 Resin | 47 |
| KRATON Rubber 1163 | 32 |
| Antioxidant 1010 | 0.5 |
| Anti-ultraviolet agent 770 | 0.5 |

The preparation method of the hot-melt pressure-sensitive adhesive layer 2 of the present application includes:
heating the naphthenic oil to 140°C, adding Zhongke Xinyuan PZX-H1100 resin, start stirring and vacuuming, with a stirring speed of 200 rpm, after the resin melts, adding rubber and additives, and keep stirring and vacuuming, stirring at 180°C for 3h, then coating. In such a case, the Zhongke Xinyuan PZX-H1100 resin and KRATON Rubber 1163 belong to the styrene-butadiene-styrene system in the styrene-butadiene-styrene-based adhesive, and the others belong to the fixed components in the adhesive.

The preferred ratios of the components of the anti-sticking coating 3 in this application after drying the water are shown in Table 2:

**Table 2 The preferred ratios of the components of the anti-sticking coating after drying the water**

| Raw materials | Ratio/% |
|---|---|
| Polyurethane resin | 69 |
| Titanium dioxide R-930 | 16 |
| Calcium carbonate cc60 | 12 |
| Antioxidant 1010 | 0.5 |
| Anti-ultraviolet agent 770 | 1.9 |
| Crosslinking agent X-404 | 0.5 |
| Bentonite | 0.1 |

The preparation method of the anti-sticking coating 3 of the present application includes: stirring a solution consisting of water and polyurethane resin at 2000 rpm, adding titanium dioxide R-930 and calcium carbonate CC60, then adding antioxidant 1010 and anti-ultraviolet agent 770 after 30 minutes, and then cross-linking agent X-404 and bentonite after 15 minutes, continuously stirring for 30 minutes and discharging. In such a case, titanium dioxide R-930 is a pigment, calcium carbonate CC60 is a filler, and bentonite is a thickener.

The product has good weather resistance. The actual exposure test found that, the product was tested outside. The results are shown in Table 3:

**Table 3 Data of exposure test**

| | Exposure time | Peel strength of concrete/MPa |
|---|---|---|
| 1 | March 1-March 31 | 2.8 |
| 2 | March 1-April 30 | 2.4 |
| 3 | March 1-May 30 | 1.7 |
| 4 | March 1-June 30 | 1.4 |

The construction period is usually two months, and after the construction is completed, the pre-laid polymer waterproof rolling materials will be covered with cement; therefore, as long as it is ensured that the peel strength of the concrete can reach 1.5 MPa of the industry standard within the two-month construction period; it can be seen from Table 3 that the data of exposure test of the present application shows that the peel strength of the concrete of the present application can all reach 1.5 MPa of the industry standard within the two-month exposure period.

For the effect of the amount of the anti-ultraviolet agent on the anti-ultraviolet performance of the waterproof rolling materials, the other ratios are shown in Table 2; and the peeling strength of the concrete after 3 days of illumination by a 50 W xenon lamp is shown in Table 4:

**Table 4 Effect of the amount of anti-ultraviolet agent on the UV performance of waterproof rolling materials**

| Amount of anti-ultraviolet agent/% | Peel strength of UV treated concrete/MPa |
|---|---|
| 0.5 | 0.8 |
| 1 | 1.3 |
| 1.5 | 2.1 |
| 2 | 2.7 |
| 2.5 | 3 |
| 3 | 3.1 |
| 3.5 | 3.1 |

From Table 4, it can be concluded that the addition amount of the anti-ultraviolet agent is in the range of 1.5%-2.5%, and the peeling strength of the UV treated concrete all exceeds the industry standard of 1.5 MPa; moreover, from the relationship between the amount of the anti-ultraviolet agent, it can be concluded that the amount of the anti-ultraviolet agent is proportional to the peeling strength of the concrete, that is, the higher the amount of the anti-ultraviolet agent, the higher the peeling strength of the concrete, therefore, the better the performance of the anti-ultraviolet agent.

For the effect of different ratios of pigments and fillers on the bonding performance of the concrete, the other ratios are shown in Table 2 and the results are shown in Table 5:

**Table 5 The effect of different ratios of pigments and fillers on the bonding performance of concrete**

| Ratios of pigments and fillers/% | Peel strength of concrete /MPa |
|---|---|
| 20 | 3.2 |
| 25 | 3.0 |
| 30 | 2.8 |
| 35 | 2.6 |

It can be seen from Table 5 that the ratio of the pigment to the filler is within the above range, and the peel strength of the UV treated concrete in this application all exceeds 1.5 MPa of the industry standard; from the ratio relationship of the pigment and the filler, it can be concluded that the ratio of the pigment to the filler is inversely proportional to the peeling strength of the concrete, that is, the higher the ratio of the pigment to the filler, the lower the peeling strength of the concrete, and therefore, the worse the bonding performance of the concrete.

For the effect of the amount of the pigment on the anti-ultraviolet performance of the waterproof rolling materials, the pigment is titanium dioxide; the other ratios are shown in Table 2; the peeling strength of the concrete after 3 days of illumination by a 50 W xenon lamp is shown in Table 6:

**Table 6 Effect of the amount of pigment on the UV performance of waterproof rolling materials**

| Amount of titanium dioxide/% | Peel strength of UV treated concrete/MPa |
|---|---|
| 5 | 0.7 |
| 10 | 1.5 |
| 15 | 2.3 |
| 20 | 2.8 |
| 25 | 3.0 |
| 30 | 2.7 |

From Table 6, it can be concluded that the amount of titanium dioxide is in the range of 10%-30%, and the peeling strength of the UV treated concrete all exceeds 1.5 MPa of the industry standard; from the relationship of the amount of titanium dioxide, it can be concluded that when the amount of titanium dioxide is 5-25%, the peeling strength of the UV treated concrete shows an increasing trend, that is, the higher the amount of the titanium dioxide, the higher the peeling strength of the UV treated concrete; when the amount of titanium dioxide is 30%, the peeling strength of the UV treated concrete begin to decrease, thus the UV performance of the waterproof rolling materials becomes worse. It can be known that the more the titanium dioxide is used, the lower the cost and the better the anti-adhesion performance of the coating, but the stability of the emulsion will be affected and the difficulty of spraying is increased.

For the effect of the amount of antioxidant on the ageing-resistant performance of the waterproof rolling materials, the other ratios are shown in Table 2, and the results are shown in Table 7:

**Table 7 The effect of the amount of antioxidant on the ageing-resistant performance of the waterproof rolling materials**

| Amount of antioxidant/% | Peel strength of heat-treated concrete/MPa |
|---|---|
| 0.1 | 2.1 |
| 0.3 | 2.9 |
| 0.5 | 3.1 |
| 0.7 | 3.1 |
| 0.9 | 3.2 |

From Table 7, it can be concluded that the amount of antioxidant is in the range of 0. 1%-0.9%, and the peeling strength of the heat treated concrete of the present application all exceeds 1.5 MPa of the industry standard; from the relationship of the amount of the antioxidant, it can be concluded that the amount of the antioxidant is proportional to the peeling strength of the heat treated concrete, that is, the higher the amount of the antioxidant, the higher the peeling strength of the heat treated concrete, therefore, the ageing-resistant performance of the waterproof rolling materials is affected.

For the effect of the amount of the cross-linking agent on the ageing-resistant performance of the waterproof rolling materials, the other ratios are shown in Table 2, and the results are shown in Table 8:

**Table 8 The effect of the amount of cross-linking agent on the ageing-resistant performance of the waterproof rolling materials**

| Amount of cross-linking agent/% | Peel strength of heat-treated concrete/MPa |
|---|---|
| 0.1 | 3.0 |
| 0.3 | 2.9 |
| 0.5 | 2.7 |
| 0.7 | 2.4 |
| 0.9 | 2.1 |

From Table 8, it can be concluded that the amount of the cross-linking agent is in the range of 0.1%-0.9%, and the peeling strength of the heat treated concrete of the present application all exceeds 1.5 MPa of the industry standard; from the relationship of the amount of the cross-linking agent, it can be concluded that the amount of the cross-linking agent is inversely proportional to the peeling strength of the heat treated concrete, that is, the higher the amount of the cross-linking agent, the worse the peeling strength of the heat treated concrete, therefore, the ageing-resistant performance of the waterproof rolling materials is affected.

For the effect of2 the amount of polyurethane resin on the bonding performance of concrete, the other ratios are shown in Table 2, and the results are shown in Table 9:

**Table 9 The effect of the amount of polyurethane resin on the bonding performance of concrete**

| Amount of polyurethane resin/% | Peel strength of concrete /MPa |
|---|---|
| 40 | 2.1 |
| 50 | 2.4 |
| 60 | 2.8 |
| 70 | 2.9 |
| 80 | 3.0 |

From Table 9, it can be concluded that the amount of the polyurethane resin is in the range of 40%-80%, and the peeling strength of the concrete of the present application all exceeds 1.5 MPa of the industry standard; from the relationship of the amount of the polyurethane resin, it can be concluded that the amount of the polyurethane resin is proportional to the peeling strength of the concrete, that is, the higher the amount of the polyurethane resin, the higher the peeling strength of the concrete, therefore, the better the bonding performance of the concrete.

It should be finally noted that, the above embodiments are merely used for illustrating, rather than limiting, the technical solution of the present invention; Although the present invention has been described in detail with reference to the foregoing embodiments, it should be understood by those of ordinary skill in the art that the technical solutions specified in the foregoing embodiments could still be modified, or some or all of the technical features thereof may be equivalently replaced; and the modifications or replacements do not make the essence of corresponding technical solutions depart from the scope of the technical solution of the embodiments of the present invention.

## Claims

1. A pre-laid polymer waterproof rolling material, wherein the rolling material comprises a sheet-like polymer carrier, a hot-melt pressure-sensitive adhesive layer on the sheet-like polymer carrier, and an anti-sticking coating on the hot-melt pressure-sensitive adhesive layer;
the anti-sticking coating includes the following components:
100-160 parts by weight of water;
50-80 parts by weight of a polyurethane resin;
15-20 parts by weight of a pigment;
10-12 parts by weight of a filler;
0.3-1 part by weight of a cross-linking agent;
0.5-1 part by weight of an antioxidant;
1-2.5 parts by weight of an anti-ultraviolet agent; and
0.03-0.2 part by weight of a thickener.

2. The pre-laid polymer waterproof rolling material according to claim 1, wherein the sheet-like polymer carrier comprises polyethylene, polypropylene, ethylene-olefin copolymer, ethylene-vinyl acetate copolymer, polyvinyl acetate, polyethyl acrylate, polytetrafluoroethylene, polyvinylidene fluoride, polyethylene terephthalate, polyvinyl chloride, polyamide, or a combination of two or more of these materials.

3. The pre-laid polymer waterproof rolling material according to claim 1, wherein the hot-melt pressure-sensitive adhesive layer comprises a butyl rubber-based adhesive, a polyisobutylene-based adhesive, a butyl-based adhesive, an acrylic adhesive, a styrene-isoprene-styrene-based adhesive, a styrene-ethylene-butene-styrene-based adhesive, a styrene-butadiene-styrene-based adhesive, a styrene-butadiene-based adhesive, or a combination of two or more of these materials.

4. The pre-laid polymer waterproof rolling material according to claim 1, wherein the filler is calcium carbonate, silicon dioxide, magnesium silicate, aluminum hydroxide or aluminum oxide; the pigment is titanium dioxide or zinc oxide; the anti-ultraviolet agent is a composite anti-ultraviolet agent; the cross-linking agent is an isocyanate; the thickener is bentonite; and the antioxidant is a phenolic antioxidant.

5. The pre-laid polymer waterproof rolling material according to claim 1, wherein the thickness of the sheet-like polymer carrier is 0.3-2 mm, the thickness of the hot-melt pressure-sensitive adhesive layer is 0.1-0.5 mm, and the thickness of the anti-sticking coating is 5-50 um.

6. The pre-laid polymer waterproof rolling material according to claim 4, wherein the titanium dioxide is a rutile nano-titanium dioxide.

7. The pre-laid polymer waterproof rolling material according to claim 1, wherein one side of the surface of the hot-melt pressure-sensitive adhesive layer is exposed, and a peelable release film is adhered to the hot-melt pressure-sensitive adhesive layer that is exposed; an adhesive layer is provided on the other side of the bottom of the sheet-like polymer carrier, a peelable release film is adhered to the adhesive layer, and the adhesive layer is a hot-melt pressure-sensitive adhesive layer.
